# EUROPEAN PATENT SPECIFICATION

(11) **EP 1 286 065 B1**
(45) Date of publication and mention of the grant of the patent: **29.02.2012**
(21) Application number: 01810799.5
(22) Date of filing: 20.08.2001
(51) Int. Cl.: F16C 1/06, D07B 1/14, B60N 2/02

(54) **Flexible shaft with noise reducing component**
Biegsame Welle mit geräuschminderdem Teil
Arbre flexible avec un composant pour la réduction de bruit

(43) Date of publication of application: 26.02.2003
(73) Proprietor: Suhner Intertrade AG, 5200 Brugg (CH)
(72) Inventor: Eichenberger, Theo, 5734 Reinach (CH); Sheldon, John, GA 30163 Rome (US); Reidy, Robert F., 5244 Birrhard (CH)
(74) Representative: Gachnang, Hans Rudolf

(56) References cited:
- WO-A-92/08061
- DE-A- 2 809 368
- DE-A1- 10 014 329
- GB-A- 1 203 191
- US-A- 3 389 579
- US-A- 4 411 168
- US-A- 4 849 038
- US-A- 4 915 340

## Description

Flexshaft is a form of flexible shaft which may be employed to transmit force or power through tension, compression, or rotation. It is distinguishable from wire rope in that it is not formed of braided or woven bundles of wire fibers. Instead, Flexshaft is formed by wrapping a succession of layers of wire or strands about a mandrel, core, or central void, each layer typically wrapped in opposite direction from the last layer. As a result of this wrapped wire layer structure, Flexshaft is uniquely adapted to transmit power in a push/pull manner, where it tends not to bunch under compression as does wire rope, and in a rotational manner where it resists forming a helix as does wire rope. Yet, and perhaps paradoxically, flexshaft is very flexible because of this same structure, and is thus well adapted to transmit power through radical bends and other tortuous paths. Flexshaft has thus found many power transmission applications where the power source must be located remote from the components to be actuated, including sunroofs, speedometer cables, weed trimmers, and power seats in vehicles.

Flexshaft is typically housed in a sheathing or casing for a number of reasons. Typically, such a casing eliminates the potential for abrasion of the flexshaft against structural members or components located adjacent to the flexshaft. Additionally, the casing eliminates potential for shaft whip or harmonic or periodic deformation which would otherwise occur as the shaft rotates at high speeds. For instance, in weed trimmers, the flexshaft is located in a plastic tube which in turn is located in the metal tube that extends from the gasoline or electric motor to the trimmer head. In power seat actuation applications, the flexshaft is also typically housed in a plastic casing not only for the reasons mentioned above, but also to reduce noise.

In power seat applications, flexshaft may be used to connect actuator motors to adjustment linkage that is adapted to move the seat forward and aft, elevate the seat front (forward tilt) elevate the seat rear (rear tilt) or adjust the back of the seat (back tilt). Unlike in most sunroof applications, where the flexshaft is employed in a push/pull manner, the flexshaft in seat applications transmits power through rotation. For leverage, in part because of the considerable weight involved relative to the power of the motor, the flexshaft must rotate at speeds often in excess of 3000 revolutions per minute.

Flexshaft rotating at high speeds in its casing can cause signficant noise. In recent times, such noise has become more or a design factor in power seats, as vehicle interior noise levels have decreased in general due to better engineering and design. One approach to noise reduction has been to wrap finished flexshaft with flocked yam, which is thus interposed between the shaft and the casing. After wrapping, the flocked yam is typically adhered to the flexshaft exterior via adhesive or partial melting by induction or otherwise. (Wear of the flocked yam is actually less of a concern than would seem the case at first blush, since power seats are only adjusted, and the flexshaft thus rotated, for several seconds once per day or typically even less frequently.) However, the flocked yam wrapped on the exterior of the flexshaft can present a wear problem, since it can tend to separate from the shaft exterior in use; in any event, the additional wrapping step adds additional time, effort and expense in producing the finished product.

GB 1203191 A discloses a flexible shaft consisting of a plurality of wire layers wound above one another. The wires of the outer layer are wound from e.g. three parallel wires. A brush-like filament may be wound onto or into the outer layer to lie in a nip between abutting respectively in a gap between adjacent turns of wire forming the outer layer. DE 10014329 A1 discloses a sound-proof geared cable comprising a core and a metal wire or tooth strip spirally wound around a peripheral surface of said core at equal intervals. A synthetic resin or rubber tube is closely spirally wound and adhered between the adjacent teeth. The cable is guided inside a conduit for transferring push/pull forces.

US 4915340 discloses a seat driving mechanism with a cable for torque transmission. A cable passes through a protection tube. For decreasing the friction between the cable and the protection tube, the cable is covered with another tube made of heat-shrinkable synthetic resin or is coated with synthetic resin.

### Summary of the Invention

The present invention provides a flexshaft as defined in claim 1 which reduces noise in rotational power transmission applications, which employs a noise reduction component to do so, but whose structure and design permits greater wear resistance and more efficient manufacture.

In the outer layer of wires or strands one wire is omitted and substituted by a strand of noise reduction material formed of flocked yarn. Such noise reduction material is wound onto the flexshaft during manufacture as part of the outer layer, and thus involves no extra manufacture step. Because it forms part of the outer layer and is thus seated within that layer, the noise reduction material is less prone to separate from the flexshaft as can be the case with conventional exterior flexshaft flocked yam. The noise reduction material is larger in diameter or net circumference than other wires or strands in the outer layer. It thus absorbs the contact between the flexshaft and the casing, and additionally tends to dampen noise caused by high speed rotation.

It is therefore an object to provide flexshaft including an outer layer of wires or strands which in turn includes at least one strand of noise reduction material.

It is an additional object to provide such flexshafts which present greater resistance to wear and admit of more efficient manufacture.

It is an additional object to provide such flexshafts in combination with casing in order to provide a power transmission medium which emits reduced noise.

It is an additional object to provide power appliance application solutions, such as power seat, pedal and steering wheel transmission systems, which include such flexshaft and casing in order to emit reduced noise.

Other objects, features and advantages will become apparent with respect to the remainder of this document.

### Brief Description of the Drawings

Fig. 1 shows one form of conventional flexshaft.
Fig. 2 shows a preferred embodiment of flexshaft according to the present invention adapted for power seating applications, which uses flocked yam in the outer layer.
Fig. 2B shows noise reduction material being applied to flexshaft according to the present invention as part of the outer layer.
Fig. 3 shows the structure of flexshaft with flocked yam according to Fig. 2.
Fig. 4 shows a line process for manufacturing flexshaft according to Fig. 2.
Fig. 5 shows flexshaft according to Fig. 2 housed in plastic casing according to the present invention.
Fig. 6 shows a power transmission system according to the present invention, using flexshaft according to the present invention, for transmitting power in power seat applications.
Fig. 7 shows in more generic and schematic form, a power transmission system according to the present invention which uses flexshaft according to the present invention.
Fig. 8 shows a power seat assembly which uses flexshaft and a power transmission system, a pedal assembly which uses flexshaft and a power transmission system and a steering wheel assembly which uses flexshaft and a power transmission system all according to the present invention

### Detailed Description

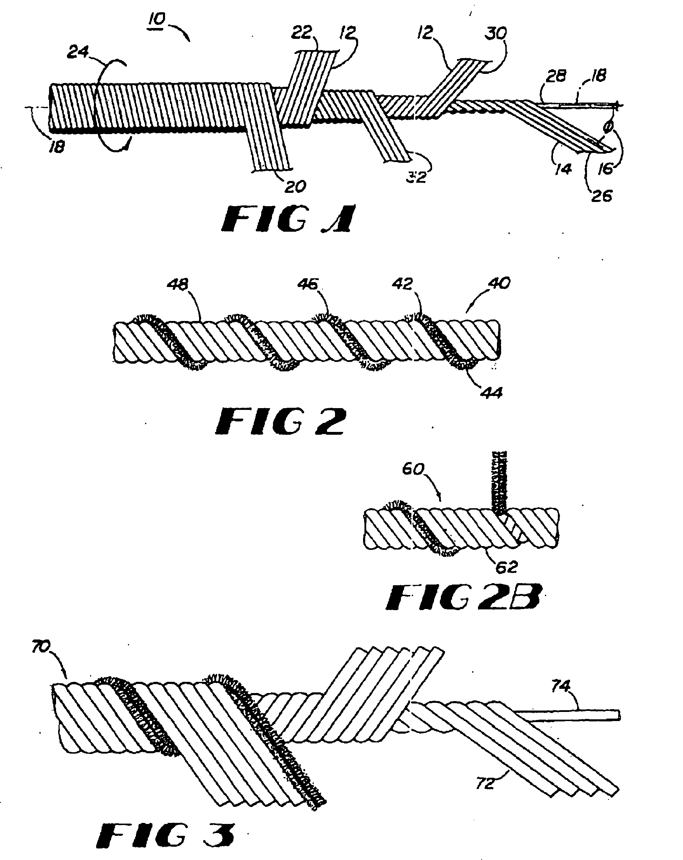

Fig. 1 shows a conventional flexshaft 10. Flexshaft 10 is formed of at least two layers 12, each of which is wrapped onto the shaft 10 in a direction generally opposite to the last layer 12, as shown by example in Fig. 1. A layer 12 may include one or more wires or strands (wires) 14. Generally a layer with fewer wires features a greater pitch 16, or angle between the longitudinal direction 18 of the shaft and the direction in which the wire 14 is oriented on the shaft 10. Such a layer with fewer wires 14 is typically more effective for transmitting power rotationally, since the wires 14 are oriented more in the direction in which power transmission occurs. However, such a high pitch often entails more cost, since more wire 14 material ends up being employed to manufacture the flexshaft 10. Looking in the longitudinal direction 18 of the shaft, if the wire 14 in a layer 12 is oriented generally extending to the left, that layer 12 is said to have a left handed pitch. It is often the case that flexshaft features an outer layer with left handed pitch.

In rotational power transmission applications, using Fig. 1 as an example, the outer layer 20 and next innermost layer 22 of wires 14 are the layers that carry or absorb the brunt of the power. The outer layer 20 carries the most power, since it is larger in circumference and is subject to more torque during power transmission. In conventional flexshaft 10 with left handed pitch 16, the outer layer 20 tends to wrap more tightly when the shaft 10 is rotating in a clockwise direction; the outer layer is thus better adapted to absorb the load in that direction than if it were being unwrapped in the counterclockwise direction. Thus, the "wrap direction" 24 or best power transmission rotational direction in a left handed pitch flexshaft is clockwise,

In the flexshaft shown in Fig. 1, which contains five layers 12, the innermost layer 26 is wrapped about a mandrel 28 with right handed pitch 16. That layer 26 contains four wires 14. The second layer 30 is wrapped in the opposite direction (with a left pitch 16) onto the flexshaft than layer 26, and contains four wires 14. The third layer 32 is wrapped in the opposite direction (with right pitch 16) than layer 30, and contains four wires 14. The fourth layer 22 is wrapped once again with a left pitch 16 and contains six wires 14. The outer layer 20 features a right pitch 16 and also contains six wires 14. This flexshaft is accordingly a stronger power transmitter in the counterclockwise direction. This flexshaft is merely one example of the almost infinite set of permutations and combinations of flexshaft which may be created for various applications. Variables include: number of layers 12, wrap direction of layers 12, pitch 16 of each layer 12, number of wires 14 in each layer 12, material and size of each wire 14, material and size of mandrel 28, whether to omit mandrel 28 and use another core or omit a core altogether, and tension with which each layer 12 is applied. Accordingly, for purposes of this document, the term "flexshaff" means a flexible shaft which is formed of at least two layers, each containing a plurality of wires or strands, one of which layers has a left pitch and one of which has a right pitch; a flexshaft need not include a mandrel or central core.

Fig. 2 shows a flexshaft 40 according to a preferred embodiment of the present invention. Flexshaft 40 contains in its outer layer, a wire 42 of noise reducing material 44 which is, in accordance with the invention, flocked yam 46. Flocked yam material used in the flexshaft of Fig. 2 is conventional flocked yam provided by Flockgam, GmbH of Germany, under the name Nylon Flock Yarn. The noise reducing material 44 stands proud of outer layer 48 when the shaft is rotating at design speed; this may be accomplished by ensuring that the noise reducing material 44 has a diameter greater than that of other wires 14 in the outer layer 48. It is possible for noise reducing material 44 to impose significant friction between the flexshaft and the casing and yet perform acceptably in applications such as power seating where the flexshaft does not rotate for lengthy periods of time.

Fig. 2B shows the noise reducing material 44 being wound onto the flexshaft 60 as part of the outer layer 62 of the flexshaft. Noise reducing material 44 may be wound as part of a separate operation; in such cases, a gap for a spare wire may be left as the outer layer 62 is being formed. The noise reducing material 44 is then wound onto the flexshaft 60 later, to form part of layer 62.

Fig. 3 shows more particularly the structure of the flexshaft 40 of Fig. 2. Inner layer 72 contains 4 wires, each formed of 016" (0,41 mm) diameter steel wire, with a .079" (2 mm) pitch of approximately 35 degrees. The mandrel 74 is formed of .020° (0,51 mm) diameter steel wire. Middle layer contains 6 wires, each formed of .020" (0,51 mm) diameter steel wire, with a .144" (3.7 mm) pitch of approximately 32.5 degrees. Outer layer 48 contains 6 wires, each formed of .028" (0.71 mm) diameter steel wire, together with one wire formed of the flock yam mentioned above, outer layer 48 having a .232" (5.9 mm) pitch of 31.6 degrees.

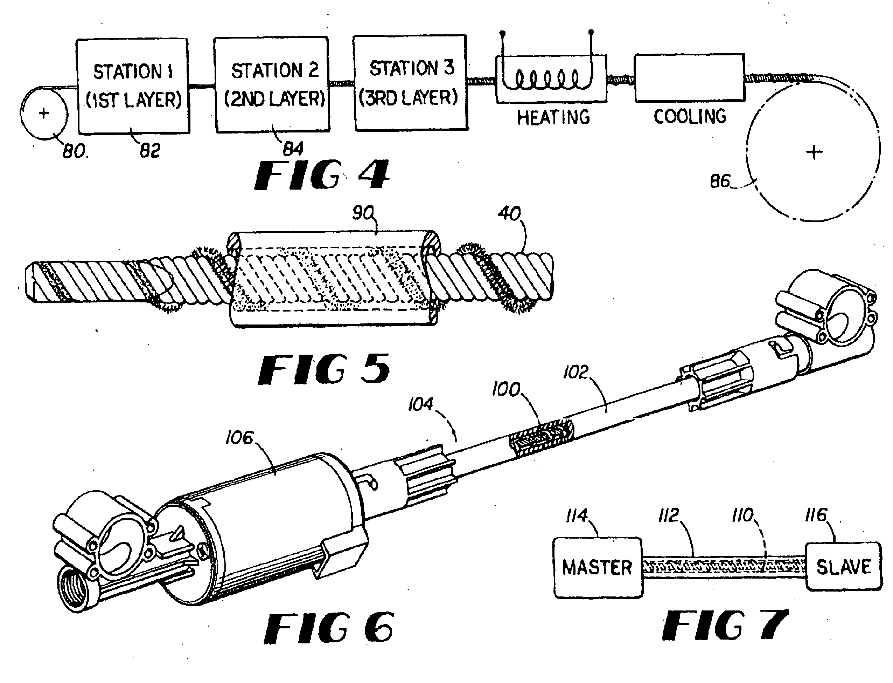

Fig. 4 shows a line process according to which flexshaft according to the present invention may be made. A mandrel reel 80 (assuming mandrel is used) feeds a first winding station 82. The mandrel travels through the center of a rotating head that rotates longitudinally about the mandrel to simultaneously guide and wind the wires in the inner layer onto the mandrel. The rotating head is fed by a spool of wire for each of the wires in the layer, the spools axially aligned with the rotating head; if there are 6 wires in the layer, for instance, 6 spools are contained in the rotating head, the mandrel traveling longitudinally through the center of each spool. The tension on the wires may be adjusted by applying controlled pressure to the spools, and the speed of the head may be adjusted as desired. Such winding station 82 is conventional, as is the line process with the exception of applying noise reducing material 44 according to the present invention.

The flexshaft-in-process proceeds to a second winding station 84 which applies the second layer of wires in a manner similar to the first layer, except that the rotational direction of the rotating head in the second station 84 is opposite to that of the head in the first station 82. The flexshaft-in-process then proceeds to third winding station 86 and additional winding stations as necessary to apply successive layers of wire. After the last winding station, the flexshaft may be heat treated using radiofrequency induction or any other desired process, cooled in a cooling tube, and then taken up on take-up reel 86.

According to the present invention, the noise reducing material 44 may be contained on a spool in the rotating head of the last winding station, and wound onto the flexshaft-in-process along with the other wires in the outer layer. Alternatively, the last winding station may be set up to leave a gap in the outer layer which is subsequently filled with noise reducing material 44 in a step subsequent to the last winding station. The gap may be filled by winding noise reducing material 44 onto the flexshaft in the outer layer.

Preferably, after the noise reducing material 44 has been applied to the flexshaft, the shaft including the noise reducing material 44 is heat treated or the material is adhered with adhesive in order to cause noise reducing material 44 to be more stably attached to the flexshaft. According to the preferred embodiment, flocked yam is bonded into the outer layer at a temperature of approximately 200 degrees Fahrenheit (93°C), for a period of approximately two seconds.

In a subsequent operation, the ends of flexshaft according to the present invention may be squared or otherwise formed to be received in or cooperate with mating components in a gear assembly, motor shaft, or wherever the shaft receives or delivers a load. In the operation where the end of the flexshaft of the present invention is squared, the flexshaft with the noise reducing material in the outer layer is inserted into a former and pressure applied to impose onto the end, including wires and noise reducing material in the outer layer, the desired shape.

Fig. 5 shows flexshaft 40 of Fig. 2 encased in casing 90 material suitable for vehicle power seat applications. Casing 90 is formed of coextruded pvc material, soft pvc inside, hard pvc outside, and features an inner diameter which is slightly larger than the diameter of the flexshaft 40 , so that the flocking material on the flocked yam 46 is deformed at least to some extent between the flexshaft and the casing 90. In other embodiments, the casing may be formed of low density polypropylene, low density polyethylene, soft or hard pvc, nylon, thermoplastic rubber, or any other desired material. The material is preferably, but need not be, plastic.

Fig. 6 shows a flexshaft 100 with casing 102 included in a power transmission assembly 104 for transmission of power rotationally. The flexshaft 100 may be actuated using an electric motor 106, and in turn actuate a driven component such as a gear assembly. All of these components are conventional, except that this transmission assembly 104 emitted greater noise before flexshaft according to the present invention was employed.

Fig. 7 shows a power transmission assembly according to the present invention more generically. A flexshaft 110 according to the present invention in a casing 112 is connected to a master unit 114 from which it receives power, and to a slave unit 116 to which it delivers power. Flexshaft according to the present invention may be used in any desired power transmission assembly.

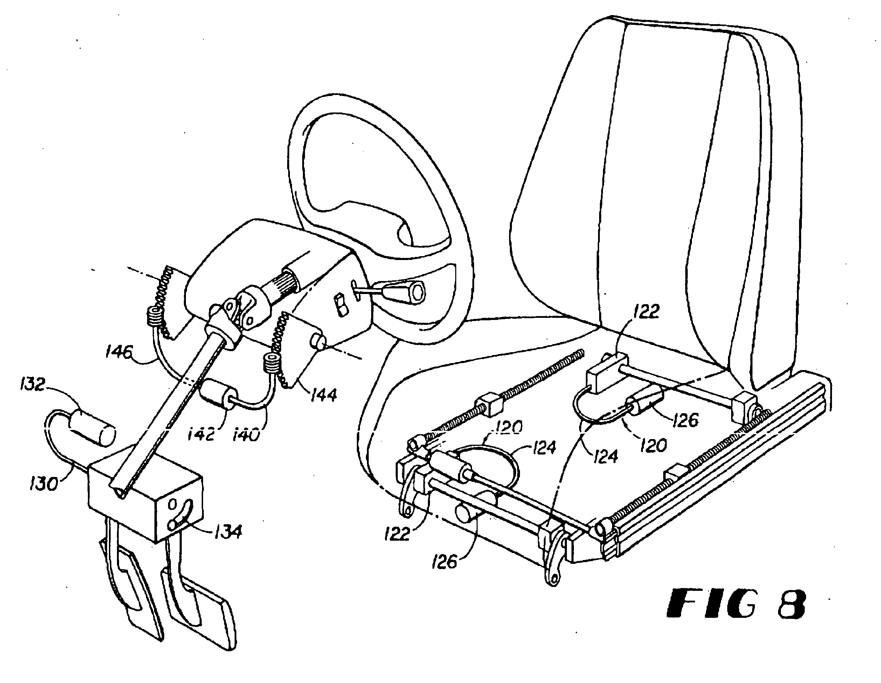

Fig. 8 shows a flexshaft 120 and power transmission assembly 122 according to the present invention employed to power vehicle seats. In such applications, multiple motors may be used, at least some to actuate seat adjustment components via flexshaft 120 and casing 124 according to the present invention. As shown in Fig. 8, for instance, a forward and aft adjustment mechanism is powered by a motor 126 which actuates gears through a flexshaft 120 and casing 124 according to the present invention. Flexshaft 120 may also be used in power seating to connect motors with adjustment mechanisms for front tilt, lumbar adjustment, rear tilt and back tilt, among other adjustments. Any desired actuators may be used, including electric motors, hydraulic motors, or handwheels in the vehide assemblies mentioned above or below.

Fig. 8 also shows a flexshaft 130 used to transmit power in a vehicle pedal adjustment assembly. There, an actuator 132 actuates an adjustment mechanism 134 via flexshaft 130 housed in a casing in order to allow the vehicle operator to adjust the spacing of one or more pedals relative to the seat and his/her feet.

Fig. 8 also shows a flexshaft 140 used to transmit power in a vehicle steering wheel adjustment assembly. There, an actuator 142 actuates an adjustment mechanism 144 via flexshaft 140 housed in a casing 146 in order to allow the vehicle operator to adjust the spacing and/or tilt of the steering wheel relative to the operator.

These seat, pedal and steering wheel adjustment assemblies may be controlled via an automatic system which includes processing, memory and input/output functionality that "remembers" the preferred settings for particular vehicle operators and causes automatic adjustment to those settings on command. In any event, whether hand controlled, motorized actuation with manual control, or such automatic control, the result is power adjustment with a quieter environment through reduction of noise previously caused by rapidly spinning flexshaft.

### Examples

The following tables show performance of various noise reducing materials. In each case, the material was hand wound onto previously formed flexshaft in order to form flexshaft of the present invention. With the exception of the noise reducing material, the structure of each shaft was the same: Wires and mandrel were formed of high carbon steel wires, with a brass finish. The mandrel was formed of .020" (0.51 mm) diameter wire. The inner layer contained 4 .016" (0.41 mm) diameter wires with .079" (2.01 mm) pitch and 35 degree pitch angle; the middle layer contained 6 .020" (0.51) diameter wires with .144" (3.66 mm) pitch and 32.5 degree pitch angle, and the outer layer contained 6 .028" (0.71 mm) diameter wires with .232" (5.8 g mm) right hand pitch and 31.6 degree pitch angle, together with the noise reducing material wire for that layer. The ends of the flexshaft were squared in conventional matter, to yield the following characteristics:

**Table 1**

| **Test Flexshaft Characteristics** | |
|---|---|
| Overall length | 11.339" (288 mm) |
| Square Length Each End | .590'" (15.0 mm) |
| Outside Diameter | .141" (3.58 mm) |
| Actual Square Size | .122/.124" (3.10/3.15 mm) |
| Type of Cut | Weld |

For each tested flexshaft, there was a gap left in the outer layer corresponding to the dimension of a yam of noise reducing material. The noise reducing material was then hand wound onto the flex shaft and adhered with Super Jet Medium Viscosity Cyanoacrylate Glue, manufactured by Carl Goldberg Models, Inc., Chicago, III. The noise reducing material extended beyond the outer diameter of the flexshaft (stood proud) to the extent shown in Table 2

**Table 2**

| **Outer Diameter of Flexshaft With Noise Reducing Material** | | |
|---|---|---|
| **Specimen** | **Noise Reducing Material** | **Outer Diameter of Flex Shaft (")** |
| 1 | Nylon Flocking (.071" staple length nylon fibers attached to a central thread) | .150/.155 (3.81/3.94 mm) |
| 2 | Wool Yarn (3 ply) | .160/.165 (4.06/4.19 mm) |
| 3 | Cotton Yarn (4 ply) | .165/.175 (4.19/4.44 mm) |
| 4 | Nylon Yarn (2 ply) | .165/.175 (4.19/ 4.44 mm) |
| 5 | Acrylic Yarn (4 ply) | .155/.160 (3.94/4.06 mm) |
| 6 | Nylon Carpet Yarn (2 ply) | .150/.160 (3.81/4.06 mm) |
| 7 | Polypropylene Carpet Yarn (2 ply) | .150/.155 (3.81/3.94 mm) |
| 8 | Polyester Carpet Yarn (2 ply) | .150/.160 (3.81./4.06 mm) |
| 9 | Nylon 50# test fishing line | .145/.150 (3.68/3.81 mm) |
| 10 | Polypropylene Fly Fishing Line | .1601.165 (4.06/4.19 mm) |

The flexshaft was subjected to a wind direction break test and an unwind direction break test as follows: an 8" (203 mm) length of the flexshaft was placed in a standard break tester and torque applied manually until at least one wire in the flexshaft failed. In all cases, because the noise reducing material adds negligible strength, the wind break point was approximately 25 inch pounds (2.8 Nm), while the unwind break point was approximately 17 inch pounds (1.9 Nm).

Each flexshaft was then subjected to a noise test as follows: The flexshaft was placed in a soft pvc casing (.190" (4.83 mm inside diameter, .470" (11.9 mm) outer diameter, coextruded inner diameter of soft pvc, outer diameter of hard pvc). The flexshaft was connected to a 12 vdc electric motor and rotated in a counterclockwise direction at approximately 3000 revolutions per minute. A Sper Scientific #840029 noise meter, comprising a microphone connected to a VU meter, was placed so that the microphone was positioned approximately 3 inches (76 mm) below the casing. The sound level from the casing with rotating shaft was then measured, for each shaft with noise reducing material listed in Table 2 above and 3 below. The 30 - 80 dB scale was used to measure peak noise, A setting with proper calibration. All of these components were placed in a wooden test box, to isolate noise. The box measured 33.25" x 31.25" x 18" (845 mm x 794 mm x 457 mm), with a small open rectangular window in the top and one end. Two rounds of testing were conducted, on two occasions; the differences in noise level reflect different positioning of the microphone. The results of the tests are as follows:

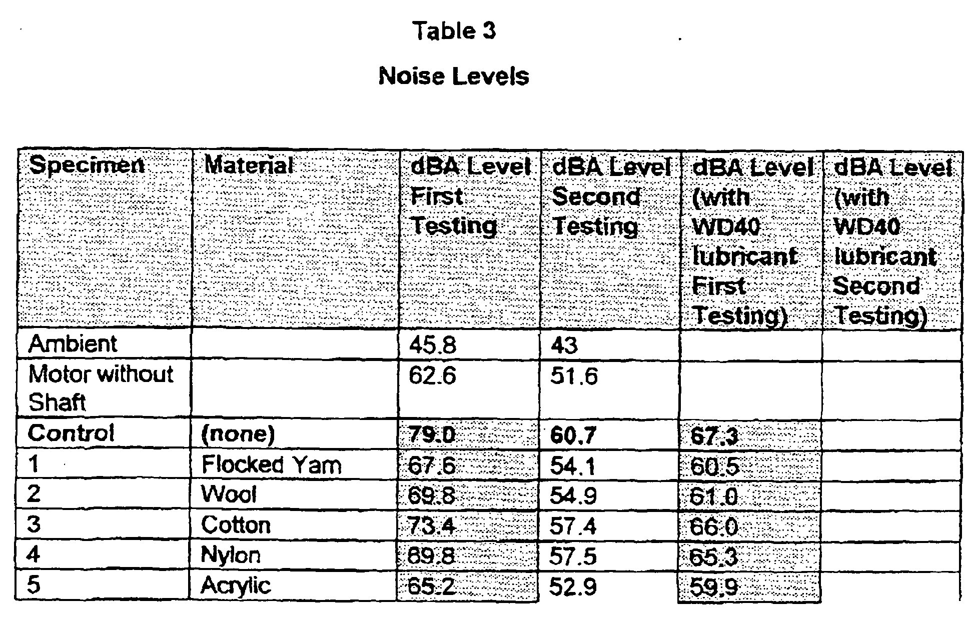

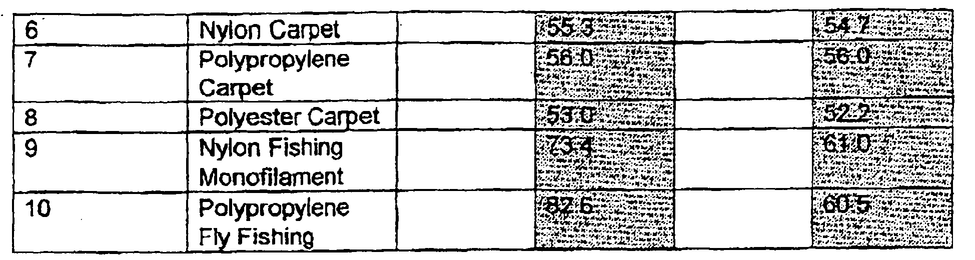

The effect of various lubricants was also tested, during the second round of testing reflected in table 3. The testing was conducted as recited above during the second round of testing, in each case using a flexshaft with nylon carpet yam as the noise reducing material (corresponding to specimen 6 above), the variable being the particular lubricant applied to the flexshaft before placing in the casing. The results are reflected in table 4:

**Table 4**

| **Specimen 6 (Nylon Carpet Yarn) with Various Lubricants** | |
|---|---|
| **Lubricant** | **dBA** |
| Control (no lubricant) | 55.3 |
| WD-40 | 54.7 |
| Motor Oil (Castrol 10W40) | 57.4 |
| Vasoline Petroleum Jelly | 56.8 |
| Wesson Vegetable Oil | 53.2 |
| Tap Water | 57.4 |
| Moly Spray | 76.4 |
| Silicone Spray | 51.2 |
| Primrose #327 Moly Disulfide Grease (NLGI Grade 2) | 54.9 |
| SKF Multi Purpose Lithium Grease (NLGI Grade 2) | 56.3 |

Fibrous yarns with loosely wound multi-layer plies seem to be very effective as noise reducing material especially if a light coat of lubricant is applied. Test results show only minor variations in the noise reducing effect of similarly constructed yarns. Softness seems to matter in reducing noise as a general matter. The loose wound yam constructions can generally be said to dampen noise or act as noise reducing material better than yarns with tight wound construction, although both categories perform effectively within the meaning of noise reduction material of the present invention.

Noise in flexshaft / casing assemblies seems to be generated as the shaft begins to vibrate inside the casing during rotation. This vibration is conjectured to be a result of, among other things, friction between the shaft and the inner diameter of the casing, and the inside diameter of the casing being out of round, even if only slightly. Once the vibration begins, the shaft must be essentially stopped to eliminate the noise.

With a light coat of lubricant, which among other things reduce friction, noise reduction material operates with less vibration and therefore produces less noise as shown above. Such lubrication also seems to help reduce noise due to the inside diameter of the casing being out of round. It may be the case that lubricants which do not reduce friction between the shaft and the casing do not reduce noise level as effectively.

The foregoing has been provided for purposes of disclosure of the present invention. Additions, deletions, substitutions and other changes may be made to the various structures, assemblies, components and materials disclosed herein without departing from the scope of the present invention.

## Claims

1. Flexshaft (40, 60) for rotational power transmission, comprising at least two adjacent layers, one of said layers being an outer layer (48,62) and another of said layers being an inner layer (72),
the inner layer (72) being formed of a plurality of wires wound in a first winding direction,
the outer layer (48,62) being formed of a plurality of wires wound in a winding direction opposite to the winding direction of the adjacent layer, whereby one wire of the outer layer is emitted to leave a gap
and a wire (42) formed of a noise reducing flocked yarn (46) is wound into said gap, the noise reducing flocked yarn wire (42,46) featuring a diameter greater than the diameter of the other wires in the outer layer (48,62) and being in contact with the layer of wires adjacent to the outer layer.

2. Flexshaft according to claim 1 in which the flocked yarn (46) is bonded into the outer layer by heat treatment after winding the flocked yarn (46) into the gap.

3. Flexshaft according to one of claims 1 or 2 in which the inner layer (72) of wires are wound about a mandrel (74).

4. Flexshaft according to one of claims 1 to 3 comprising one intermediate layer, the intermediate layer being adjacent to the inner layer and to the outer layer.

5. Flexshaft according to one or more of claims 1 to 4 in which at least one end of the flexshaft is squared to fit power transmission components.

6. A power transmission assembly, comprising:
a flexshaft (110),
a master (114) for delivering power to said flexshaft (110), and
a slave (116) for receiving power from said flexshaft, wherein said flexshaft (110) is a flexshaft according to one or more of claims 1 to 5.

7. A power transmission assembly according to claim 6 further comprising a casing (112) that encases the flexshaft (110).

8. An adjustable vehicle component, comprising:
at least two components adapted to move and to be adjusted in orientation relative to each other in order to accommodate an occupant,
at least one adjustment mechanism (134, 144) connected to the components in order to permit adjustment of them relative to each other,
at least one motor (126, 132, 142) adapted to provide power in order to cause such adjustment,
a flexshaft (120, 130, 140) according to one or more of claims 1 to 5 connected to said at least one motor (126, 132, 142) and said at least one adjustment mechanism (134, 144).

9. An adjustable vehicle component according to claim 8 further comprising an electronic controller adapted to control said at least one motor in order to automatically adjust the vehicle component based on information stored in the controller.

10. An adjustable vehicle component according to claim 8 comprising an adjustable seat and/or an adjustable pedal and/or an adjustable steering wheel.

## Patentansprüche

1. Flexible Welle (40, 60) zur umlaufenden Kraftübertragung, umfassend mindestens zwei benachbarte Schichten, wobei eine dieser Schichten eine äussere Schicht (48, 62) ist und eine andere dieser Schichten eine innere Schicht (72), wobei die innere Schicht (72) aus einer Mehrzahl von Adern geformt ist, die in einer ersten Windungsrichtung gewunden sind, und wobei die äussere Schicht (48, 62) aus einer Mehrzahl von Adern geformt ist, die in einer Windungsrichtung entgegengesetzt zur Windungsrichtung der benachbarten Schicht gewunden sind, wobei eine Ader der äusseren Schicht weggelassen ist, um einen Zwischenraum zu hinterlassen, und wobei eine aus einem lärmmindernden beflockten Garn (46) ausgebildete Ader (42) in diesen Zwischenraum eingewunden ist, und wobei die aus lärmminderndem beflockten Garn ausgebildete Ader (42, 46) einen grösseren Durchmesser aufweist als die anderen Adern in der äusseren Schicht (48, 62) und in Kontakt ist mit der Schicht aus Adern angrenzend an die äussere Schicht.

2. Flexible Welle nach Anspruch 1, wobei das beflockte Garn (46) nach dem Einwinden in den Zwischenraum mittels einer Wärmebehandlung in die äussere Schicht gebondet ist.

3. Flexible Welle nach einem der Ansprüche 1 oder 2, wobei die Adern der inneren Schicht (72) um eine Trägerwelle (74) gewunden sind.

4. Flexible Welle nach einem der Ansprüche 1 bis 3, umfassend eine zur inneren Schicht und zur äusseren Schicht benachbarte mittlere Schicht.

5. Flexible Welle nach einem oder mehreren der Ansprüche 1 bis 4, wobei mindestens ein Ende der flexiblen Welle zur Anpassung an Kraftübertragungskomponenten eckig ausgebildet ist.

6. Kraftübertragungsanordnung, umfassend: eine flexible Welle (110), einen Antrieb (114) zum Antreiben dieser flexiblen Welle (110) und einen von dieser flexiblen Welle (110) antreibbaren Abtrieb (116), wobei diese flexible Welle (110) eine flexible Welle (110) gemäss einem oder mehreren der Ansprüche 1 bis 5 ist.

7. Kraftübertragungsanordnung nach Anspruch 6, weiter umfassend ein Gehäuse (112), welches die flexible Welle (110) umgibt.

8. Einstellbare Fahrzeugkomponente, umfassend:
mindestens zwei zur Anpassung an einen Nutzer relativ zueinander bewegbare und in ihrer relativen Ausrichtung zueinander einstellbare Komponenten, mindestens einen mit den Komponenten verbundenen und
zum Einstellen der Komponenten relativ zueinander ausgebildeten Einstellmechanismus (134, 144), mindestens einen zum Einstellen verwendbaren Motor (126, 132, 142), eine mit dem mindestens einen Motor (126, 132, 142) sowie dem mindestens einen Einstellmechanismus (134, 144) verbundene flexible Welle (120, 130, 140) gemäss einem oder mehreren der Ansprüche 1 bis 5.

9. Einstellbare Fahrzeugkomponente nach Anspruch 8, weiter umfassend eine elektronische Steuerung zum Steuern des Motors, wobei die Fahrzeugkomponente auf Basis von in der Steuerung gespeicherten Informationen automatisch einstellbar ist.

10. Einstellbare Fahrzeugkomponente nach Anspruch 8, umfassend einen einstellbaren Sitz und/oder ein einstellbares Pedal und/oder ein einstellbares Lenkrad.

## Revendications

1. Arbre flexible (40, 60) destiné à une transmission de puissance rotative, comprenant au moins deux couches adjacentes, une première desdites couches étant une couche extérieure (48, 62) et une autre desdites couches étant une couche intérieure (72),
la couche intérieure (72) étant formée d'une pluralité de fils métalliques enroulés dans une première direction d'enroulement,
la couche extérieure (48, 62) étant formée d'une pluralité de fils métalliques enroulés dans une direction d'enroulement opposée à la direction d'enroulement de la couche adjacente, grâce à quoi un fil métallique de la couche extérieure est omis pour laisser un espace et un fil métallique (42) formé d'un fil floqué pour une réduction de bruit (46) est enroulé dans ledit espace, le fil métallique à fil floqué pour une réduction de bruit (42, 46) décrivant un diamètre supérieur au diamètre des autres fils métalliques dans la couche extérieure (48, 62) et étant en contact avec la couche des fils métalliques adjacente à la couche extérieure.

2. Arbre flexible selon la revendication 1, dans lequel le fil floqué (46) est collé dans la couche extérieure pour un traitement thermique après l'enroulement du fil floqué (46) à l'intérieur de l'espace.

3. Arbre flexible selon l'une des revendications 1 ou 2, dans lequel la couche intérieure (72) des fils métalliques est enroulée autour d'un mandrin (74).

4. Arbre flexible selon l'une des revendications 1 à 3, comprenant une première couche intermédiaire, la couche intermédiaire étant adjacente à la couche intérieure et à la couche extérieure.

5. Arbre flexible selon l'une ou plusieurs des revendications 1 à 4, dans lequel au moins une extrémité de l'arbre flexible est carrée pour recevoir des composants de transmission de puissance.

6. Ensemble de transmission de puissance, comprenant :
un arbre flexible (110),
une unité maîtresse (114) destinée à délivrer une puissance audit arbre flexible (110), et
une unité esclave (116) destinée à recevoir la puissance provenant dudit arbre flexible, dans lequel ledit arbre flexible (110) est un arbre flexible selon l'une ou plusieurs des revendications 1 à 5.

7. Ensemble de transmission de puissance selon la revendication 6, comprenant en outre un boîtier (112) qui enferme l'arbre flexible (110).

8. Composant de véhicule réglable, comprenant :
au moins deux composants conçus pour se déplacer et être réglés selon une orientation l'un par rapport à l'autre de manière à recevoir un occupant,
au moins un mécanisme de réglage (134, 144) relié aux composants de manière à permettre leur réglage l'un par rapport à l'autre,
au moins un moteur électrique (126, 132, 142) conçu pour délivrer une puissance de manière à provoquer un tel réglage,
un arbre flexible (120, 130, 140) selon l'une ou plusieurs des revendications 1 à 5, relié audit au moins un moteur électrique (126, 132, 142) et audit au moins un mécanisme de réglage (134, 144).

9. Composant de véhicule réglable selon la revendication 8, comprenant en outre une unité de commande électronique conçue pour commander ledit au moins un moteur électrique de manière à régler automatiquement le composant de véhicule sur la base des informations mémorisées dans l'unité de commande.

10. Composant de véhicule réglable selon la revendication 8, comprenant un siège réglable et/ou une pédale réglable et/ou un volant réglable.
